# EUROPEAN PATENT APPLICATION

(11) **EP 1 302 176 A2**
(43) Date of publication of application: **16.04.2003**
(21) Application number: 02022285.7
(22) Date of filing: 07.10.2002
(51) Int. Cl.: A61C 13/38, B25H 1/02, A47B 21/03, A61G 15/14

(54) **Workbench for dental technicians**

(30) Priority: 10.10.2001 IT VI20010209
(71) Applicant: Dental Art S.p.A., 36030 Montecchio Precalcino (VI) (IT)
(72) Inventor: Faccin, John Anthony, 36073 Cornedo Vicentino (VI) (IT); Vitella, Giampietro, 36014 Santorso (VI) (IT)
(74) Representative: Bonini, Ercole

(57) **Abstract**

A workbench for dental prostheses is disclosed comprising: a working table (2) leaning on a support frame (3); a couple of arm resting appendages (2a, 2b) projecting from the table (2) to an operator; a drawer (5) slidably inserted into the frame (3) and provided with arm resting outlines (5a, 5b); a suction unit (6) to collect the working residues of the prosthesis, arranged between the arm resting appendages (2a, 2b) and comprising a shaped bracket (7) protruding to the operator and provided with a through opening (9) communicating with a suction tube (8). The shaped bracket (7) is coupled to the suction tube (8) through connecting means (10) allowing to rotate the shaped bracket (7) along a generally vertical axis (Y).

## Description

The present invention relates to a workbench for dental technicians, particularly adapted for working dental prostheses.

It is well known that the dental technicians for working dental prostheses use particular workbenches provided with suction units adapted to connect the residues produced during prosthesis working.

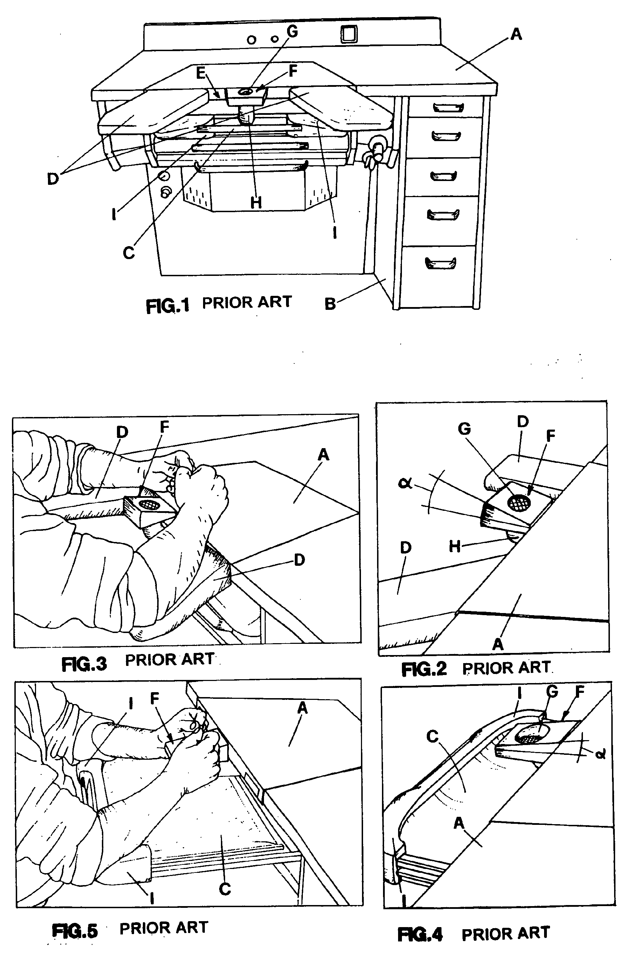

An embodiment of the prior art shown in FIG. 1 is provided with a workbench comprising a working table A leaning on a support frame resting on the ground, in which there are at least a sliding drawer C inserted in the frame and a couple of arm resting appendages D connected to the working table and facing the operator sitting in front of the workbench.

Between the arm resting appendages there is a suction unit E comprising a shaped bracket F in which an opening G is defined communicating with a suction tube M.

The above mentioned workbenches allow two different work postures of the operator, one adopted by the American and North European School and the other by the Italian School.

When working according to the teachings of the American and North European Schools, the operator as shown in FIGs. 2 and 3 uses the workbench leaning the arms on the arm resting appendages D while the hands grasping the prosthesis to be worked, are leaning on the working table A in an advanced position relative to the shaped bracket F of the suction unit E.

The shaped bracket F has the face in which the suction opening G is made, inclined by the angle α to the working table so as to make easier collection of the dust produced during working of the prosthesis.

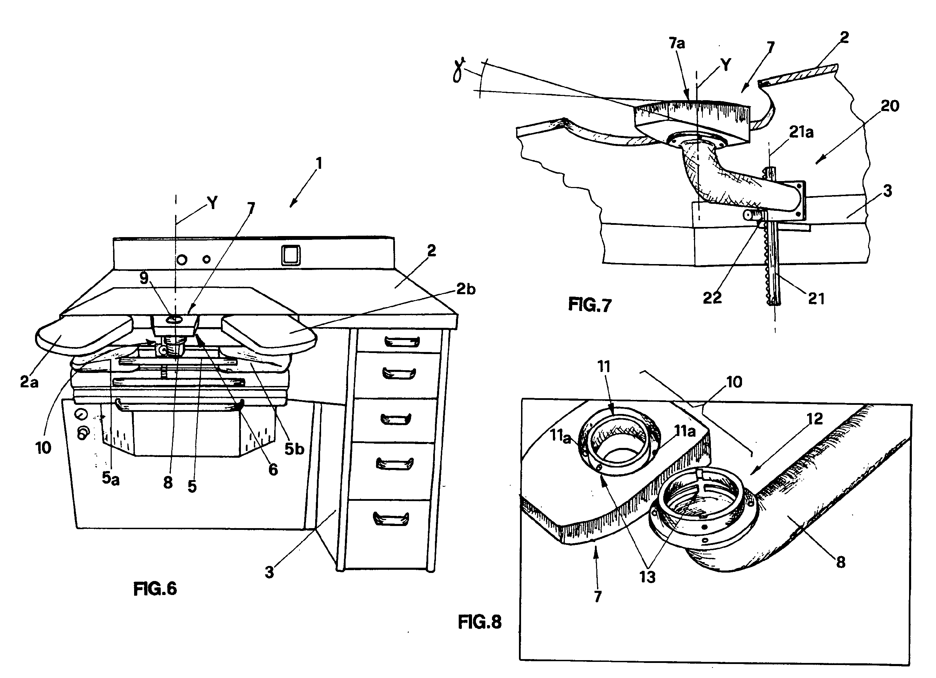

On the contrary when the operator works in the posture adopted by the Italian School, he uses the workbench in the way indicated in FIGs. 4 and 5 where one can see that he leans the arms on proper arm resting outlines I made in the drawer C while the hands grasping the prosthesis to be worked, are leaning on the shaped bracket F.

In this case the prosthesis is placed above the suction opening G made in the shaped bracket F which has the upper surface inclined by the angle α to the operator.

The two different above described operative modes involve use of different shaped brackets with inclination in mutually opposite directions.

Therefore each workbench must be provided with two different shaped brackets, and each bracket must be removably fixed to the working table and/or the suction tube in order to be easily disassembled and replaced whether the operator decides to work according to one or the other of the two above described modes.

One can understand that this involves a first drawback consisting of the necessity for the manufacturer to make for each workbench at least a couple of different shaped brackets and connection means allowing to apply them removably to the working table and/or the suction tube.

Another drawback consists in that to shift from one operative mode to the other it is necessary to replace the shaped bracket and remove or apply again the arm resting appendages when passing from one operative mode to the other.

Another drawback consists also in that by passing from one operative mode to the other, in some cases it is also necessary to modify the height of the shaped bracket to fit its position to the physical characteristics of the operator and more particularly to the length of his arms.

The present invention aims at overcoming said drawbacks.

More particularly a first object of the invention is to provide a workbench for dental prostheses with a single shaped bracket adapted to be used for both operative modes adopted by the American and North European School or by the Italian School.

Another object is to provide the workbench of the invention with moving means allowing to adjust the height position of the shaped bracket.

The foregoing objects are attained by making a workbench for dental prostheses that according to the main claim comprises:
- a working table leaning on a support frame resting on the ground;
- a couple of arm resting appendages projecting to an operator sitting in front of said workbench;
- at least a sliding drawer inserted in said frame and provided with arm resting outlines;
- a section unit adapted to collect the working residues of said prosthesis, arranged between said arm resting appendages and comprising a shaped bracket protruding to said operator, provided with a through opening communicating with a suction tube and is characterized in that said shaped bracket is coupled to said suction tube through connection means allowing to rotate said shaped bracket along a generally vertical axis.

According to the invention the suction tube is preferably applied to adjusting means fixed to the workbench frame allowing to move vertically the suction tube and the shaped bracket associated thereto, so that each operator may define the optimal position of the bracket as a function of his needs.

According to the invention the rotation of the shaped bracket is allowed by an annular flange associated to the shaped bracket and an annular counter bracket associated to the suction tube that are rotatably coupled to each other one inside the other with a generally bayonet coupling.

Advantageously according to the invention the manipulations allowing the operator to shift from one operative mode to the other are made quicker.

Also advantageously the number of elements equipping the workbench that must be removed is reduced.

The foregoing objects and advantages will be better understood by reading the description of a preferred embodiment of the invention that is given hereinafter as an illustrative and non limiting example with reference to the accompanying sheets of drawing in which:
- FIGs. 1 to 5 show a workbench for working dental prostheses belonging to the prior art and the corresponding working positions;
- FIG. 6 is an isometric view of the workbench of the invention;
- FIG. 7 is an isometric view of a part of the workbench of the invention with particular reference to the suction unit;
- FIG. 8 is an isometric view of the means connecting the shaped bracket to the suction tube;
- FIGs. 9 to 12 are different views of the means connecting the shaped bracket to the suction tube;
- FIG. 13 shows a detail of FIG. 7; and
- FIGs. 14 to 16 show different modes to use the workbench of the invention.

The workbench for dental prostheses of the present invention is shown in FIG. 6 where it is generally indicated with 1.

One can see that the workbench comprises a working table 2 leaning on the upper part of a support frame 3 resting on the ground and a couple of arm resting appendages 2a, 2b preferably but necessarily removably applied to the working table 2.

In the frame 3 there are one or more drawers in which the first of said drawers indicated with 5, is arranged directly under the arm resting appendages 2a, 2b and is provided with arm resting outlines 5a, 5b. A suction unit generally indicated with 6 and adapted to collect the working residues of the prosthesis is arranged between the arm resting appendages 2a, 2b and comprises a shaped bracket 7 coupled with a suction tube 8 communicating to the outside by means of a through opening 9 made in the bracket 7.

According to the invention the shaped bracket 7 is coupled to the suction tube 8 through connecting means 10 allowing rotation of the shaped bracket 7 along a generally vertical axis Y.

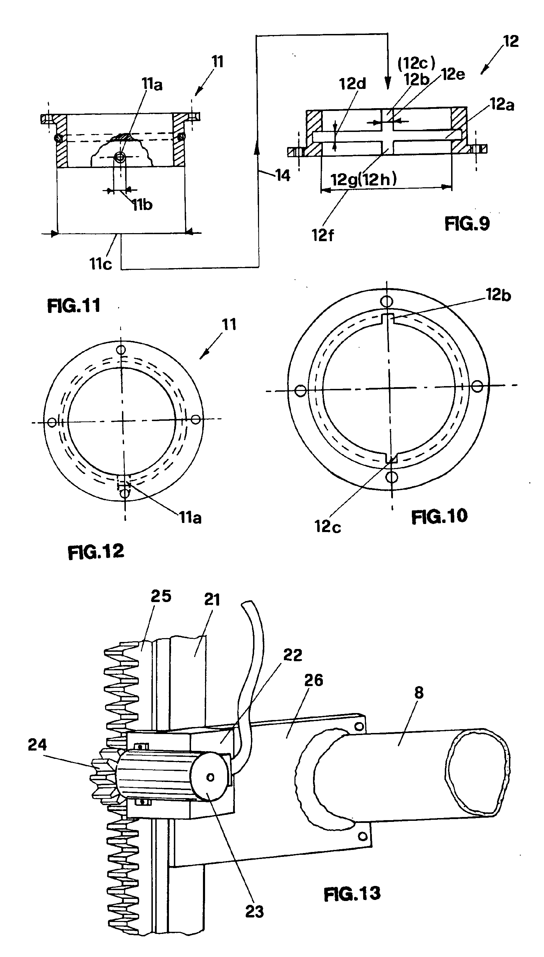

The connecting means 10 as shown in FIGs. 8 to 12, comprise an annular flange 11 associated to the shaped bracket 7 through screws 11a and an annular counter flange 12 associated to the suction tube 8, which can be rotatably joined to each other one inside the other through coupling means of the bayonet type generally indicated with 13.

More particularly in FIGs. 9 to 12 one can see that the bayonet coupling means 13 comprise:
- a circumferential groove 12a made inside the annular counter flange 12;
- a couple of transversal opposite channels 12b, 12c also made in the annular counter flange 12 along one generatrix and intersecting the circumferential groove 12a; and
- a pin 11a radially protruding from the annular flange 11, having a width 11b lower than the width 12d and 12e of the circumferential groove 12a and the transversal channels 12b, 12c of the annular counter flange 12, respectively.

Furthermore the outer diameter 11c of the annular flange 11 is slightly lower than the diameter 12f of the annular counter flange 12 so that the annular flange 11 and the annular counter flange 12 may be mutually coupled by sliding movement.

In this way when the annular flange 11 is coaxially coupled inside the annular counter flange 12 along the direction indicated by arrow 14, the pin 11a is inserted into one of the transversal channels 12b, 12c until it meets the circumferential groove 12a in which the pin may be received when the annular flange 11 is rotated clockwise or anticlockwise.

After coupling, the annular flange 11 may freely rotate inside the corresponding annular counter flange 12 and may be blocked in two diametrically opposite positions when the pin 11 a is inserted with an axial movement into the bottom zone 12g, 12h of each transversal channel 12b, 12c.

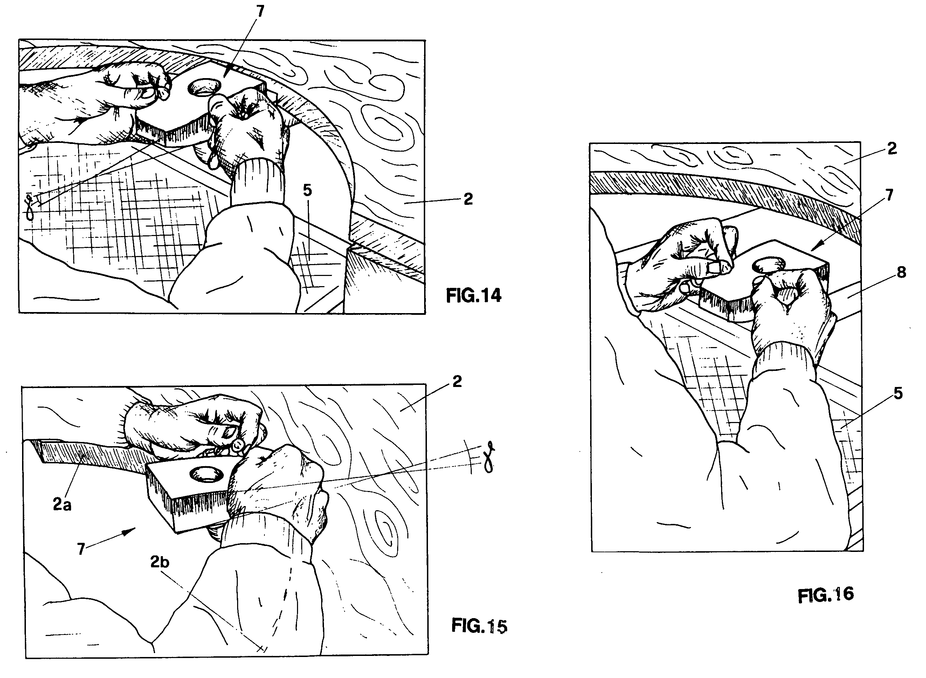

In this way as shown in FIG. 7, the shaped bracket having the upper surface 7a inclined by the angle γ relative to the working table 2, may be arranged inclined either to the operator as shown in FIG. 14 or to the working table as shown in FIG. 15.

Therefore using the same bracket 7, the operator may work according to the method of the Italian School shown in FIG. 14 with the arms leaning on the drawer 5 or according to the method of the American and North European School with the arms leaning on the protruding appendages 2a, 2b of the table 2 as shown in fig 15.

More particularly one can see in FIGs. 7 and 13 that the shaped flange 7 is also provided with driving means generally indicated with 20 that are adapted to move the flange vertically along the above mentioned axis Y.

Said driving means 20 comprise a linear guide 21 fixed to the frame 3 and arranged with the longitudinal axis 21a generally vertical and parallel to the axis Y, along which at least a shoe 22 of the ball circulation kind is sliding.

To the shoe 22 a motor 23 is also fixed and provided with a pinion gear 24 engaged with a rack 25 fixed to the linear guide 21.

A bracket 26 is connected to the shoe 22 and supports the suction tube 8 that in its turn supports the shaped flange 7 and the above described corresponding connecting means 10.

By energizing the motor 23 it is possible to move the suction tube 8 and therefore the shaped bracket 7 supported thereby along the axis Y in both directions either upwards or downwards.

In this way as shown as an example in FIG. 16, the operator may use the workbench working according to any of the techniques shown in FIGs. 14 and 15, adjusting the height of the bracket 7 according to his needs.

From the foregoing one can see that the workbench 1 of the invention and more particularly the embodiment of the suction unit comprising the shaped bracket 7 and the connecting means 10 to the suction tube 8 equipping the workbench, fully attain the intended objects.

It is obvious that the shaped bracket 7 may be made with any kind of profile and protection devices may also be applied to it, adapted to avoid throwing of splints to the surrounding environment thus protecting the operator.

Modifications and executive variations may be made in the constructional stage to the invention, that should be considered all covered by the present patent when falling within the scope of the appended claims.

## Claims

1. A workbench (1) for dental prostheses comprising:
- a working table (2) leaning on a support frame (3) resting on the ground;
- a couple of arm resting appendages (2a, 2b) projecting to an operator sitting in front of said workbench (1);
- at least a drawer (5) slidably inserted in said frame (3) and provided with arm resting outlines (5a, 5b);
- a suction unit (6) adapted to collect the working residues of said prosthesis, arranged between said arm resting appendages (2a, 2b) and comprising a shaped bracket (7) protruding to said operator, provided with a through opening (9) communicating with a suction tube (8), **characterized in that** said shaped bracket (7) is coupled with said suction tube (8) through connecting means (10) allowing to rotate said shaped bracket (7) along a generally vertical axis (Y).

2. The workbench (1) according to claim 1) **characterized in that** said connecting means (10) comprise an annular flange (11) associated to said shaped bracket (7) and an annular counter flange (12) associated to said suction tube (8), said annular flange (11) and said annular counter flange (12) being rotatably coupled to each other one inside the other.

3. The workbench (1) according to claim 2) **characterized in that** said annular flange (11) and said annular counter flange (12) can be coupled one inside the other by mutual axial sliding movement by means of bayonet coupling means (13).

4. The workbench (1) according to claim 3) **characterized in that** said the bayonet coupling means (13) comprise: a circumferential groove (12a) made inside said annular counter flange (12); at least a transversal channel (12b, 12c) made along a generatrix in said annular counter flange (12) to intersect said circumferential groove (12a); at least a pin (11a) radially protruding from said annular flange (11) adapted to be rotatably received in said circumferential groove (12a) after having being axially inserted in one of said at least one transversal channel (12b, 12c) when said flange (11) is coupled into said counter flange (12).

5. The workbench (1) according to claim 1) **characterized in that** said suction tube (8) is associated to driving means (20) adapted to move the tube along said generally vertical axis (Y).

6. The workbench (1) according to claim 5) **characterized in that** said driving means (20) comprise: a linear guide (21) fixed to said frame (3) and arranged with the longitudinal axis (21a) generally in a vertical direction; at least a shoe (22) supporting said suction tube (8) slidably coupled to said linear guide (21).

7. The workbench (1) according to claim 6) **characterized in that** said driving means (20) comprise a motor (23) associated to said at least a shoe (22) and provided with a pinion gear (24) engaged with a rack (25) fixed to said linear guide (21).

8. The workbench (1) according to claim 6) or 7) **characterized in that** said shoe (22) is a ball circulation shoe.

9. The workbench (1) according to claim 1) **characterized in that** said shaped bracket (7) has its upper surface (7a) inclined by an angle γ relative to said working table (2).

10. The workbench (1) according to claim 1) **characterized in that** said arm resting appendages (2a, 2b) belong to said working table (2).

11. The workbench (1) according to claim 10) **characterized in that** the arm resting appendages (2a, 2b) are removably connected to said working table (2).
